# EUROPEAN PATENT APPLICATION

(11) **EP 3 422 067 A1**
(43) Date of publication of application: **02.01.2019**
(21) Application number: 18180122.6
(22) Date of filing: 27.06.2018
(51) Int. Cl.: G02B 7/02

(54) **LENS UNIT**

(30) Priority: 29.06.2017 JP 2017127183
(71) Applicant: Nidec Sankyo Corporation, Suwa-gun, Nagano 393-8511 (JP)
(72) Inventor: NAKAJIMA, Tomoaki, Nagano, 393-8511 (JP); KANZAKI, Yosuke, Nagano, 393-8511 (JP)
(74) Representative: Becker Kurig Straus

(57) **Abstract**

A lens unit includes a plurality of lenses and a lens barrel. The lenses include at least one plastic lens (22, 228) which is molded by injection molding. A side face (220) of the plastic lens is formed with a lens side press-fitted portion which is press-fitted to the lens barrel and a parting line (PL22) which is formed by parting surfaces of a fixed die and a movable die of a die used in the injection molding. An inner peripheral face of the lens barrel is formed with a press-fitting holding part (74) to which the lens side press-fitted portion is press-fitted and held, and a large diameter part (64a) whose diameter is larger in a radial direction than a diameter of the press-fitting holding part, and the large diameter part faces the parting line and is formed on an opposite side in a press-fitting direction with respect to the lens side press-fitted portion.

## Description

### TECHNICAL FIELD

The disclosure relates to a lens unit including a plurality of lenses and a lens barrel holding the lenses.

### BACKGROUND

A plastic lens used in a lens unit is, for example, formed by injection molding by using a die comprised of a fixed die for molding a lens face on one side and a movable die for molding a lens face on the other side (see, for example, Japanese Patent Laid-Open No. Hei 05-096580).

When a plastic lens is to be held by a lens barrel, the plastic lens is press-fitted to the lens barrel. Further, a structure may be adopted that a flange part is formed so as to surround outer peripheries of lens faces and is easily held by the lens barrel.

In a current camera market, demand for an on-vehicle sensing camera and the like has been increased and a further high-performance camera is required. For example, a measure is also required from a viewpoint to eliminate an adverse effect due to a minute parting line in a projected shape which is generated in a portion of parting surfaces of a movable die and a fixed die when a plastic lens is injection-molded. In other words, a technique has been demanded that, when a plastic lens is to be press-fitted, distortion of a lens face and positional deviation of the lens due to the parting line are prevented to improve the optical performance.

### SUMMARY

In view of the problem described above, the disclosure provides a lens unit which is capable of preventing deviation of an axial position of a lens and distortion of a lens face due to a parting line formed on a plastic lens when the plastic lens is press-fitted to a lens barrel.

The disclosure provides a lens unit including a plurality of lenses, and a lens barrel which holds the plurality of the lenses. The plurality of the lenses includes at least one plastic lens which is molded by injection molding, and a side face of the plastic lens is formed with a lens side press-fitted portion which is press-fitted to the lens barrel and a parting line which is formed by parting surfaces of a fixed die and a movable die of a die used in the injection molding. An inner peripheral face of the lens barrel is formed with a press-fitting holding part to which the lens side press-fitted portion is press-fitted and held, and a large diameter part whose diameter is larger in a radial direction than a diameter of the press-fitting holding part, and the large diameter part faces the parting line and is formed on an opposite side in a press-fitting direction with respect to the lens side press-fitted portion. According to this structure, when the plastic lens is to be press-fitted to the lens barrel, the parting line formed in the plastic lens is not press-fitted and thus occurrence of deviation of an axial position of the lens and occurrence of distortion of the lens face due to a minute projecting part formed in the parting line can be prevented. In other words, deterioration of the optical characteristic can be prevented.

It may be structured that the side face of the plastic lens is formed with a first inclined face on a side in the press-fitting direction with respect to the lens side press-fitted portion so that a diameter of the first inclined face becomes smaller toward the press-fitting direction. Since the side face of the plastic lens is formed with the first inclined face, in other words, a taper shape is formed, press-fitting of the lens to the lens barrel can be smoothly performed.

It may be structured that the side face of the plastic lens is formed with a second inclined face on an opposite side in the press-fitting direction with respect to the parting line so that a diameter of the second inclined face becomes smaller toward the opposite side in the press-fitting direction.

It may be structured that the plastic lens is provided with a lens face and a flange part surrounding an outer periphery of the lens face and an image side face of the flange part is formed with an ejector pin trace. When the plastic lens is to be injection-molded, especially in a separating step of the molded product from a die (mold opening step) and, in a case that the ejector pin is used, the flange part provided in an outer periphery of the lens where no influence is given to the lens face is pressed by the ejector pin and thus influence to the lens face can be eliminated.

It may be structured that the ejector pin trace is formed so that at least a part of the ejector pin trace faces an object side face of the flange part. In a case that the ejector pin is to be abutted and press the flange part, a lens face is not formed in a pressing direction of the ejector pin and the flange part is formed in the pressing direction. Therefore, in addition to the lens face on the image side where the ejector pin is abutted, the lens face on the opposite side can be prevented from being acted by a force of the ejector pin.

It may be structured that the plurality of the lenses includes a plurality of the plastic lenses, and at least one of the plurality of the plastic lenses is structured so that a width in the optical axis direction of the lens side press-fitted portion is set within a width of a resin solid portion between an object side lens face and an image side lens face of the plastic lens in the optical axis direction. A load is applied to a center direction from the lens side face after the lens is press-fitted. However, the resin solid portion is provided in a direction of the load, in other words, in a direction perpendicular to the optical axis direction, and the direction of the load is deviated from the position where the lens faces are formed. Therefore, an adverse effect to the lens faces can be eliminated.

It may be structured that one of the plurality of the lenses is fitted to a lens holder, and the shape of the plastic lens is applied to a shape of the lens holder. Specifically, it may be structured that the lens holder is molded by injection molding, a lens holder side face of the lens holder is formed with a holder side press-fitted portion which is press-fitted to the lens barrel and a parting line which is formed by parting surfaces of a fixed die and a movable die of a die used in the injection molding, an inner peripheral face of the lens barrel is formed with a holder press-fitting holding part to which the holder side press-fitted portion is press-fitted and held, and a large diameter part whose diameter is larger in a radial direction than a diameter of the holder press-fitting holding part, and the large diameter part faces the parting line and is formed on an opposite side in the press-fitting direction with respect to the holder side press-fitted portion. For example, there may be a case that a glass lens which is one of the plurality of the lenses is fitted to the lens holder and the lens holder is press-fitted to the lens barrel. Even in this case, another technique is not required and the structure does not become complicated.

It may be structured that the press-fitting holding part is formed in stripe shapes toward the optical axis direction.

It may be structured that the plurality of the lenses includes two plastic lenses adjacent to each other in an optical axis direction, the two plastic lenses are structured so that an outer diameter of the plastic lens disposed on the image side is set to be smaller than an outer diameter of the plastic lens disposed on the object side, the press-fitting holding part for the plastic lens on the object side is formed to the image side with respect to a portion where the parting line of the plastic lens on the image side is formed, and the press-fitting holding part for the plastic lens on the object side is used as the large diameter part for the plastic lens on the image side. According to this structure, the press-fitting holding part for the plastic lens on the object side is used as the large diameter part for the plastic lens on the image side as it is and thus the structure of an inner peripheral face of the lens barrel can be simplified.

It may be structured that one of the plurality of the lenses is fitted to a lens holder which is molded by injection molding, an outer diameter of the lens holder is set to be smaller than the outer diameter of the plastic lens on the image side, and the lens holder is disposed on the image side with respect to the plastic lens on the image side so as to be adjacent to each other. A lens holder side face of the lens holder is formed with a holder side press-fitted portion which is press-fitted to the lens barrel and a parting line which is formed by parting surfaces of a fixed die and a movable die of a die used in the injection molding, an inner peripheral face of the lens barrel is formed with a holder press-fitting holding part to which the holder side press-fitted portion is press-fitted and held, and a large diameter part whose diameter is larger in a radial direction than a diameter of the holder press-fitting holding part, the press-fitting holding part for the plastic lens on the image side is formed to the image side with respect to a portion where the parting line of the lens holder is formed, and the press-fitting holding part for the plastic lens on the image side is used as the large diameter part for the lens holder. According to this structure, the press-fitting holding part for the plastic lens on the image side (the plastic lens on the object side with respect to the lens holder) is used as the large diameter part for the lens holder as it is. Therefore, the structure of the inner peripheral face of the lens barrel can be simplified.

Further, the disclosure provides a lens unit including a plurality of lenses, and a lens barrel which holds the plurality of the lenses. One of the plurality of the lenses is fitted to a lens holder which is molded by injection molding, and a lens holder side face of the lens holder is formed with a holder side press-fitted portion which is press-fitted to the lens barrel and a parting line which is formed by parting surfaces of a fixed die and a movable die of a die used in the injection molding. An inner peripheral face of the lens barrel is formed with a press-fitting holding part to which the lens side press-fitted portion is press-fitted and held, and a large diameter part whose diameter is larger in a radial direction than a diameter of the press-fitting holding part, and the large diameter part faces the parting line and is formed on an opposite side in a press-fitting direction with respect to the lens side press-fitted portion.

Further, the disclosure provides a lens unit including a plurality of lenses, and a lens barrel which holds the plurality of the lenses. The plurality of the lenses includes at least one glass lens which is molded by glass molding, the glass lens is held by a lens holder, and a side face of the glass lens is formed with a glass lens side press-fitted portion which is press-fitted to the lens holder and a parting line which is formed by parting surfaces of a fixed die and a movable die of a die used in the glass molding. An inner peripheral face of the lens holder is formed with a press-fitting holding part to which the glass lens side press-fitted portion is press-fitted and held, and a large diameter part whose diameter is larger in a radial direction than a diameter of the press-fitting holding part, and the large diameter part faces the parting line and is formed on an opposite side in a press-fitting direction with respect to the press-fitted portion.

Other features and advantages of the disclosure will be apparent from the following detailed description, taken in conjunction with the accompanying drawings that illustrate, by way of example, various features of embodiments of the disclosure.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
FIGs. 1A, 1B and 1C are views showing an entire lens unit in accordance with an embodiment of the disclosure.
FIG. 2 is an exploded perspective view showing a lens unit in accordance with an embodiment of the disclosure.
FIG. 3 is a vertical sectional view showing a lens barrel in accordance with an embodiment of the disclosure.
FIGs. 4A and 4B are enlarged views showing a press-fitted portion of a second lens in accordance with an embodiment of the disclosure.
FIG. 5 is an enlarged view showing a press-fitted portion of a third lens in accordance with an embodiment of the disclosure.
FIG. 6 is an enlarged view showing a press-fitted portion of a fourth lens in accordance with an embodiment of the disclosure.
FIG. 7 is an enlarged view showing a press-fitted portion of a fifth lens in accordance with an embodiment of the disclosure.
FIG. 8 is a cross-sectional view showing an entire third lens in a press-fitted state in accordance with an embodiment of the disclosure.
FIGs. 9A, 9B and 9C are views showing manufacturing steps in which a second lens is injection-molded in accordance with an embodiment of the disclosure.
FIGs. 10A and 10B are perspective views showing a second lens in accordance with an embodiment of the disclosure.

### DETAILED DESCRIPTION

An embodiment of the disclosure will be described below with reference to the accompanying drawings.

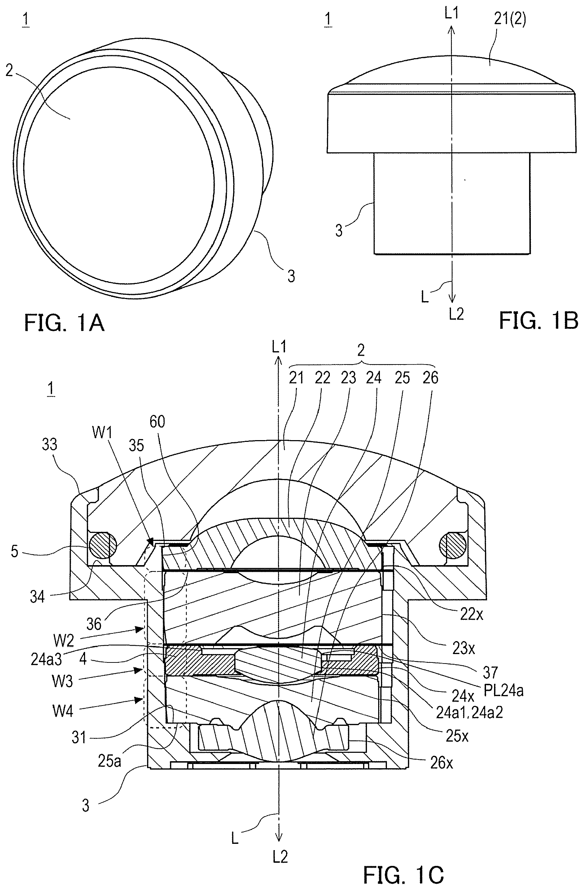

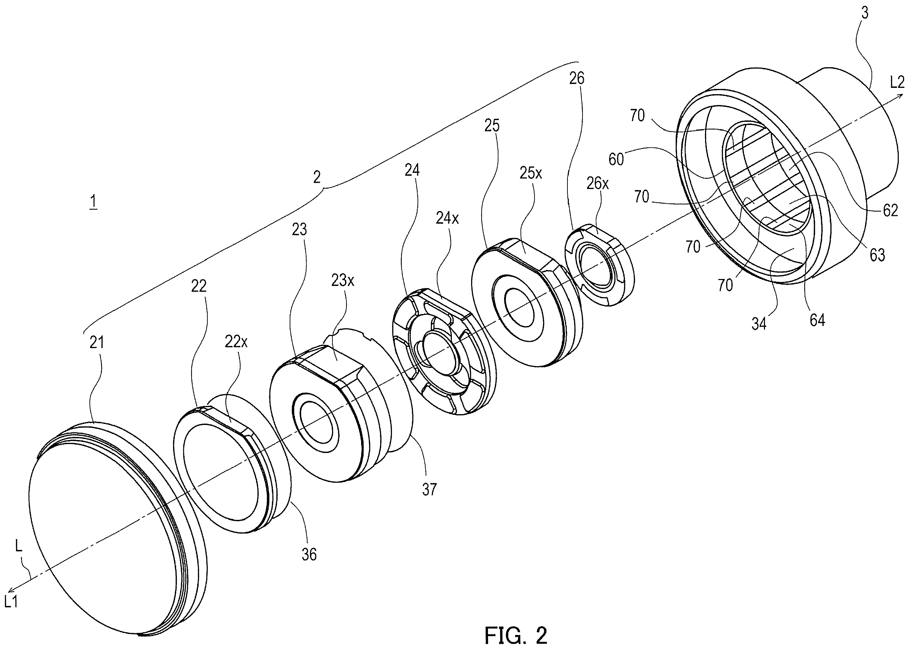

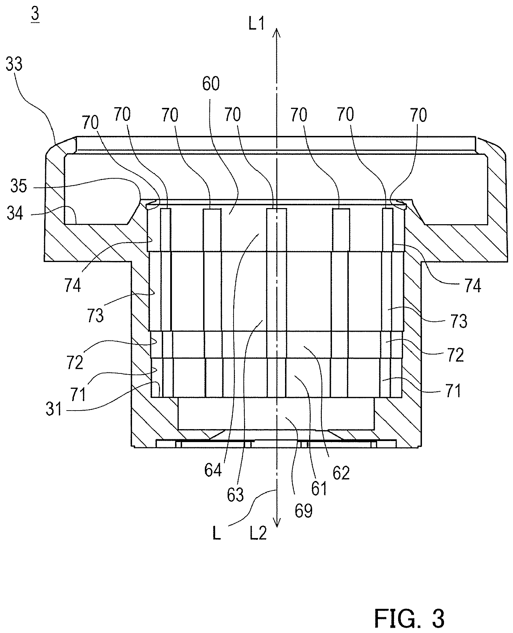

FIGs. 1A, 1B and 1C are views showing an entire lens unit 1 in accordance with an embodiment of the disclosure. Fig. 1A is its perspective view, Fig. 1B is its front view and Fig. 1C is its vertical sectional view. FIG. 2 is an exploded perspective view showing the lens unit 1. FIG. 3 is a vertical sectional view showing a lens barrel 3 from which a wide angle lens 2 is detached in Fig. 1C.

A lens unit 1 is a lens assembly which is incorporated in an on-vehicle periphery monitoring camera, a monitoring camera, an intercom or the like. In this embodiment, an "object side "L1"" and an "image side "L2"" in the disclosure are an object side and an image side in an optical axis "L" direction, and an "optical axis direction" is a direction parallel to an optical axis "L".

### (Entire Structure)

The lens unit 1 includes a wide angle lens 2 which is comprised of a plurality of lenses and a lens barrel 3 which accommodates the wide angle lens 2. The wide angle lens 2 is constituted of six lenses, i.e., a first lens 21, a second lens 22, a third lens 23, a fourth lens 24, a fifth lens 25 and a sixth lens 26 which are closely disposed from the object side "L1" to the image side "L2" along the optical axis "L". In this embodiment, a light shielding sheet 36 for preventing light from entering to the image side is closely disposed between the second lens 22 and the third lens 23. Further, a diaphragm 37 is closely disposed between the third lens 23 and the fourth lens 24 (lens holder 4).

In the lenses constituting the wide angle lens 2, the first lens 21 is disposed on the most object side "L1". The second lens 22 is located on the image side "L2" of the first lens 21. The third lens 23 is located on the image side "L2" of the second lens 22. The fourth lens 24 is located on the image side "L2" of the third lens 23. The fourth lens 24 is disposed in the lens barrel 3 in a state that the fourth lens 24 is press-fitted and fixed to a lens holder 4 made of resin and is further reinforced by an adhesive. The fifth lens 25 is located on the image side "L2" of the fourth lens 24. The sixth lens 26 is located on the image side "L2" of the fifth lens 25. The fifth lens 25 and the sixth lens 26 constitute a cemented lens.

A glass lens is used for the first lens 21 from a viewpoint that a lens face on the object side of the first lens 21 is hard to be scratched even when the lens face on the object side of the first lens 21 located on the most object side is exposed. Plastic lenses are used for the second lens 22, the third lens 23, the fifth lens 25 and the sixth lens 26 from a viewpoint that a plastic lens is superior in workability and economical efficiency of a lens. A glass lens is used for the fourth lens 24 from a viewpoint that it is superior in surface accuracy of a lens and in optical characteristics such as a refractive index with respect to temperature change.

The wide angle lens 2 of the lens unit 1 in this embodiment is constituted of the six lenses described above. However, the number of the lenses is not limited to this embodiment and, further, material of a lens is not limited to this embodiment, and the lens unit 1 may be provided with no cemented lens.

The lens barrel 3 is a cylindrical tube-shaped lens frame made of resin and is formed with an inner peripheral face 60 toward the image side along outer peripheral faces of the respective lenses structuring the wide angle lens 2. A sixth lens accommodation part 69 in which the sixth lens 26 is disposed and whose diameter is smaller than that of the inner peripheral face 60 is formed on the image side "L2" with respect to the inner peripheral face 60.

The inner peripheral face 60 is formed with a plurality of press-fitting protruded parts 70 in a protruded shape protruded to an inner side in a diameter direction at equal intervals in a circumferential direction. In the lenses constituting the wide angle lens 2, the second lens 22, the third lens 23, the lens holder 4 (fourth lens 24) and the fifth lens 25 are press-fitted to the press-fitting protruded parts 70, and the outer peripheral faces of the lenses are supported by the inner peripheral face 60 of the lens barrel 3 and thereby the lenses are positioned in the optical axis "L" direction. In other words, the press-fitting protruded parts 70 function as press-fitting holding parts for the second lens 22, the third lens 23, the lens holder 4 (fourth lens 24) and the fifth lens 25.

Further, a flat face part 25a which is formed in the periphery of an image side face of the fifth lens 25 is placed on a ring-shaped flat face part 31 which is extended to an inner side in a circumferential direction on the image side of the lens barrel 3. Further, a periphery of a face on the object side "L1" of the second lens 22 is fixed by a caulked part 35 provided at an end part of an inner peripheral face on the object side of the lens barrel 3.

As a result, the second lens 22, the third lens 23, the lens holder 4 (fourth lens 24), the fifth lens 25 and the sixth lens 26 are positioned in the optical axis "L" direction. In addition, after an O-ring 5 is attached to an outer peripheral portion of the first lens 21, the first lens 21 to which the O-ring 5 is attached is assembled to a ring-shaped groove part 34. After that, a periphery of the first lens 21 is fixed by a caulked part 33 provided at an end part on the object side of the lens barrel 3. The first lens 21 is positioned in the optical axis "L" direction in this step.

In this embodiment, in order to prevent an error in an insertion order of the second lens 22, the third lens 23, the lens holder 4 (fourth lens 24), the fifth lens 25 and the sixth lens 26, the outer diameters of the respective lenses are set to become smaller toward the image side "L2" and the inner peripheral face 60 of the lens barrel 3 is formed narrower so as to correspond to the outer diameters. Further, "D"-cut parts 22x, 23x, 24x, 25x and 26x are respectively formed in right side regions in FIG. 1C and upper side portions in FIG. 2 of the second lens 22, the third lens 23, the lens holder 4 (fourth lens 24), the fifth lens 25 and the sixth lens 26.

### (Press-fitting Structure)

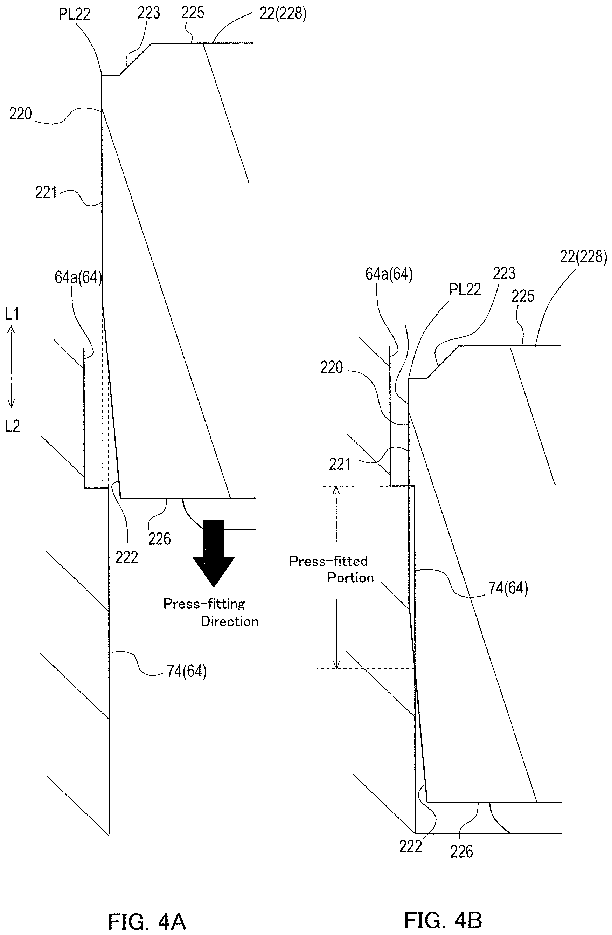

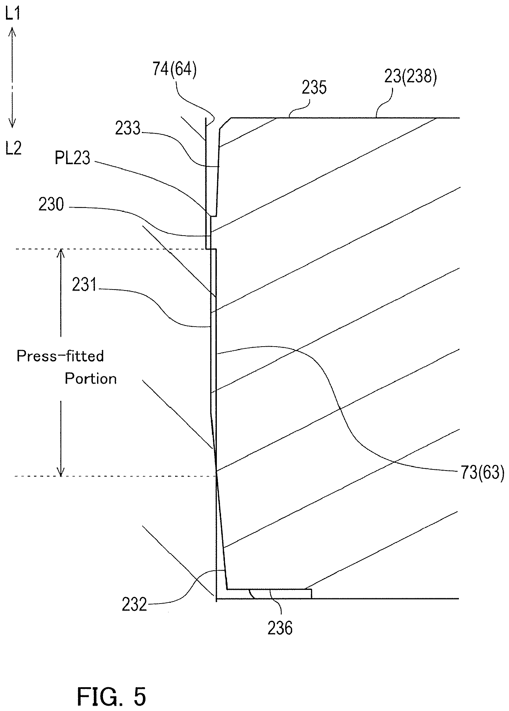

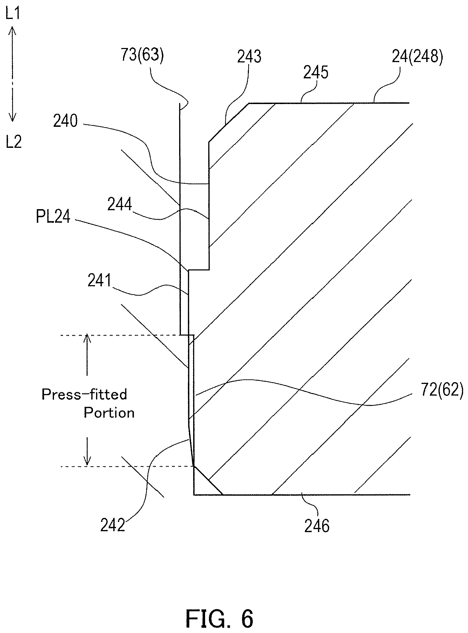

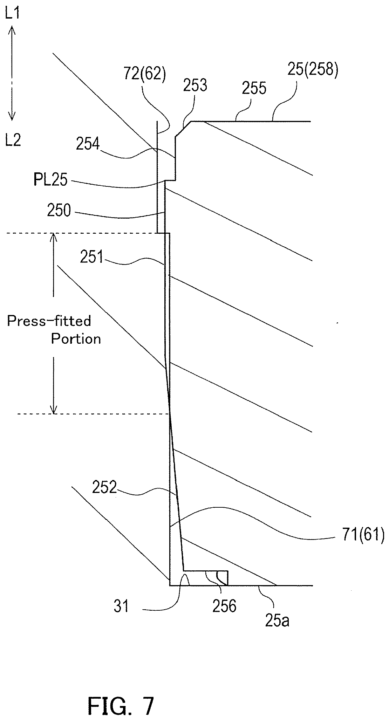

Press-fitting structures of the lenses will be specifically described below with reference to the cross-sectional view of the lens barrel 3 in FIG. 3 and the enlarged views of press-fitted portions in FIGs. 4A through 7. FIGs. 4A and 4B are enlarged views showing a press-fitted portion of the second lens 22. FIG. 4B is an enlarged view showing a region "W1" in Fig. 1C and FIG. 4A is a view showing a state before the second lens 22 is press-fitted to the region "W1". FIG. 5 is an enlarged view showing a press-fitted portion of the third lens 23 and is an enlarged view showing a region "W2" in FIG. 1C. FIG. 6 is an enlarged view showing a press-fitted portion of the fourth lens 24 and is an enlarged view showing a region "W3" in FIG. 1C. FIG. 7 is an enlarged view showing a press-fitted portion of the fifth lens 25 and is an enlarged view showing a region "W4" in FIG. 1C.

As shown in FIG. 3, the inner peripheral face 60 of the lens barrel 3 is formed with a first inner peripheral face 61, a second inner peripheral face 62, a third inner peripheral face 63, and a fourth inner peripheral face 64 whose diameters are slightly and gradually increased from the image side "L2" toward the object side "L1". In FIG. 3, the caulked part 33 and the caulked part 35 show already caulked states and, before the respective lenses are held by the lens barrel 3, the caulked part 33 and the caulked part 35 are extended toward the object side in the optical axis direction.

The press-fitting protruded parts 70 formed on the inner peripheral face 60 are formed in stripe shapes in the upper and lower direction in the drawing (toward the image side "L2" from the object side "L1"). In this embodiment, each of the press-fitting protruded parts 70 is formed as a first press-fitting protruded part 71 through a fourth press-fitting protruded part 74 in a divided manner according to inner peripheral face positions where they are formed, in other words, on each of the first inner peripheral face 61 through the fourth inner peripheral face 64.

The first press-fitting protruded parts 71 provided on the first inner peripheral face 61 on the most image side "L2" (lower side in the drawing) of the inner peripheral face 60 function as a press-fitting holding part for the fifth lens 25. The second press-fitting protruded parts 72 provided on the second inner peripheral face 62 function as a press-fitting holding part for the lens holder 4 (fourth lens 24). The third press-fitting protruded parts 73 provided on the third inner peripheral face 63 function as a press-fitting holding part for the third lens 23. The fourth press-fitting protruded parts 74 provided on the fourth inner peripheral face 64 on the most object side "L1" (upper side in the drawing) function as a press-fitting holding part for the second lens 22.

Press-fitting of the second lens 22 will be described below with reference to FIGs. 4A and 4B. The second lens 22 is press-fitted to the fourth press-fitting protruded parts 74 as described above. In this embodiment, as shown in FIGs. 4A and 4B, a region 64a where no fourth press-fitting protruded part 74 is formed is provided on the object side "L1" of the fourth inner peripheral face 64. The fourth press-fitting protruded parts 74 of the press-fitting protruded parts 70 are formed from a lower side of the region 64a in a direction to the image side "L2" (same as the press-fitting direction). In other words, in a press-fitting structure of the second lens 22, the region 64a is a large diameter part and the region where the fourth press-fitting protruded parts 74 are formed is a small diameter part.

A protruding amount of the fourth press-fitting protruded part 74 is determined based on a press-fitting force and strength of material of each of the second lens 22 and the lens barrel 3. Protruding amounts of the first press-fitting protruded part 71 through the third press-fitting protruded part 73 are also determined in a similar manner.

A lens side face 220 is provided with a vertical face 221 in a substantially center portion in the upper and lower direction, an image side inclined face 222 which is a first inclined part on the image side "L2" with respect to the vertical face 221 (lower side in the drawing), and an object side inclined face 223 which is a second inclined part on the object side "L1" with respect to the vertical face 221 (upper side in the drawing). A boundary between the object side inclined face 223 and the vertical face 221 is set to be a parting line "PL22" accompanied with molding of the second lens 22. In the lens side face 220, a part of each of the vertical face 221 and the image side inclined face 222, in other words, a region in the lens side face 220 which is represented as a "press-fitted portion" in FIG. 4B, functions as a lens side press-fitted portion.

In this embodiment, when the second lens 22 is to be press-fitted, the image side inclined face 222 in a taper shape is first press-fitted to the fourth press-fitting protruded parts 74 and thus the second lens 22 can be press-fitted smoothly.

When press-fitting of the second lens 22 is completed, a state shown in FIG. 4B is obtained. In this case, in the region 64a which is the large diameter part, the lens side face 220 is separated from the region 64a which is the large diameter part in a press-fitted state. In other words, the parting line "PL22" is faced and separated from the region 64a which is the large diameter part, and the parting line "PL22" is formed on an opposite side to the press-fitted portion in the press-fitting direction and thus the parting line "PL22" is not press-fitted to the fourth press-fitting protruded parts 74.

Press-fitting of the third lens 23 will be described below with reference to FIG. 5. FIG. 5 shows a state that the third lens 23 is press-fitted to the third press-fitting protruded parts 73. The third lens 23 is, as described above, press-fitted to the third press-fitting protruded parts 73. In a region of the inner peripheral face 60 where the third lens 23 is disposed, the fourth inner peripheral face 64 and the fourth press-fitting protruded parts 74 are formed on the object side "L1" of the third lens 23, and the third inner peripheral face 63 and the third press-fitting protruded parts 73 are formed on the image side "L2". In other words, the fourth press-fitting protruded parts 74 which are the press fitting part for the second lens 22 adjacent to the third lens 23 on the object side are formed to the image side with respect to the portion where the parting line "PL23" of the third lens 23 is formed, and the third press-fitting protruded parts 73 which are a press-fitting portion for the third lens 23 is formed on the image side with respect to the portion where the parting line "PL23" is formed.

In this embodiment, a diameter in the region where the fourth press-fitting protruded parts 74 which are the press fitting part for the second lens 22 are formed is larger than that in the region where the third press-fitting protruded parts 73 are formed. Therefore, in the press-fitting structure of the third lens 23, the region where the fourth press-fitting protruded parts 74 are formed becomes a large diameter part, and the region where the third press-fitting protruded parts 73 are formed becomes a small diameter part.

The lens side face 230 is provided with a vertical face 231 in a substantially center portion in the upper and lower direction, an image side inclined face 232 which is a first inclined part on the image side "L2" (lower side in the drawing) with respect to the vertical face 231, and an object side inclined face 233 which is a second inclined part on the object side "L1" (upper side in the drawing) with respect to the vertical face 231. A boundary between the object side inclined face 233 and the vertical face 231 is set to be a parting line "PL23" accompanied with molding of the third lens 23. In the lens side face 230, a part of each of the vertical face 231 and the image side inclined face 232, in other words, a region in the lens side face 230 which is represented as a "press-fitted portion" in FIG. 5, functions as a lens side press-fitted portion.

When the third lens 23 is to be press-fitted, the image side inclined face 232 in a taper shape is first press-fitted to the third press-fitting protruded parts 73 and thus the third lens 23 can be press-fitted smoothly. Further, in the press-fitted state, the lens side face 230 is separated from the fourth press-fitting protruded parts 74 (fourth inner peripheral face 64) which are the large diameter part. In other words, the parting line "PL23" is faced and separated from the fourth inner peripheral face 64 which is the large diameter part, and the parting line "PL23" is formed on an opposite side to the press-fitted portion in the press-fitting direction and thus the parting line "PL23" is not press-fitted to the third press-fitting protruded parts 73.

Press-fitting of the lens holder 4 (in the state that the fourth lens 24 is accommodated in the lens holder 4) will be described below with reference to FIG. 6. FIG. 6 shows a state that the lens holder 4 is press-fitted to the second press-fitting protruded parts 72. The lens holder 4 is, as described above, press-fitted to the second press-fitting protruded parts 72. In a region of the inner peripheral face 60 where the lens holder 4 is disposed, the third inner peripheral face 63 and the third press-fitting protruded parts 73 are formed on the object side "L1" of the lens holder 4, and the second inner peripheral face 62 and the second press-fitting protruded parts 72 are formed on the image side "L2". In other words, the third press-fitting protruded parts 73 which are the press fitting part for the third lens 23 adjacent to the lens holder 4 on the object side are formed to the image side with respect to the portion where the parting line "PL24"of the lens holder 24 is formed, and the second press-fitting protruded parts 72 which are a press-fitting portion for the lens holder 4 is formed on the image side with respect to the portion where the parting line "PL24" is formed.

In this embodiment, a diameter in a region where the third press-fitting protruded parts 73 are formed is larger than that in a region where the second press-fitting protruded parts 72 are formed. Therefore, in the press-fitting structure of the lens holder 4, the region where the third press-fitting protruded parts 73 are formed becomes a large diameter part, and the region where the second press-fitting protruded parts 72 are formed becomes a small diameter part.

The lens side face 240 is provided with a vertical face 241 in a substantially center portion in the upper and lower direction, an image side inclined face 242 which is a first inclined part on the image side "L2" (lower side in the drawing) with respect to the vertical face 241, and an object side inclined face 243 on the object side "L1" (upper side in the drawing) with respect to the vertical face 241. In this embodiment, a flange small diameter part 244 having a diameter smaller than that of the vertical face 241 is formed between the vertical face 241 and the object side inclined face 243 which is a second inclined part. A boundary of a step part between the flange small diameter part 244 and the vertical face 241 is set to be a parting line "PL24". In the lens holder side face 240, a part of each of the vertical face 241 and the image side inclined face 242, in other words, a region in the lens holder side face 240 which is represented as a "press-fitted portion" in FIG. 6, functions as a lens side press-fitted portion (specifically, holder side press-fitted portion).

When the lens holder 4 is to be press-fitted, the image side inclined face 242 in a taper shape is first press-fitted to the second press-fitting protruded parts 72 and thus the lens holder 4 can be press-fitted smoothly. Further, in the press-fitted state, the lens holder side face 240 is separated from the third press-fitting protruded parts 73 (third inner peripheral face 63) which are the large diameter part. In other words, the parting line "PL24" is faced and separated from the third inner peripheral face 63 which is the large diameter part, and the parting line "PL24" is formed on an opposite side to the press-fitted portion in the press-fitting direction and thus the parting line "PL24" is not press-fitted to the second press-fitting protruded parts 72.

Press-fitting of the fifth lens 25 will be described below with reference to FIG. 7. FIG. 7 shows a state that the fifth lens 25 is press-fitted to the first press-fitting protruded parts 71. The fifth lens 25 is, as described above, press-fitted to the first press-fitting protruded parts 71. In a region of the inner peripheral face 60 where the fifth lens 25 is disposed, the second inner peripheral face 62 and the second press-fitting protruded parts 72 are formed on the object side "L1" of the fifth lens 25, and the first inner peripheral face 61 and the first press-fitting protruded parts 71 are formed on the image side "L2".

In this embodiment, a diameter in a region where the second press-fitting protruded parts 72 are formed is larger than that in a region where the first press-fitting protruded parts 71 are formed. Therefore, in the press-fitting structure of the fifth lens 25, the region where the second press-fitting protruded parts 72 are formed becomes a large diameter part, and the region where the first press-fitting protruded parts 71 are formed becomes a small diameter part.

The lens side face 250 is provided with a vertical face 251 in a substantially center portion in the upper and lower direction, an image side inclined face 252 which is a first inclined part on the image side "L2" (lower side in the drawing) with respect to the vertical face 251, and an object side inclined face 253 on the object side "L1" (upper side in the drawing) with respect to the vertical face 251. In this embodiment, a flange small diameter part 254 having a diameter smaller than that of the vertical face 251 is formed between the vertical face 251 and the object side inclined face 253 which is a second inclined part. A boundary of a step part between the flange small diameter part 254 and the vertical face 251 is set to be a parting line "PL25". In the lens side face 250, a part of each of the vertical face 251 and the image side inclined face 252, in other words, a region in the lens side face 250 which is represented as a "press-fitted portion" in FIG. 7, functions as a lens side press-fitted portion.

When the fifth lens 25 is to be press-fitted, the image side inclined face 252 in a taper shape is first press-fitted to the first press-fitting protruded parts 71 and thus the fifth lens 25 can be press-fitted smoothly. Further, in the press-fitted state, the lens side face 250 is separated from the second press-fitting protruded parts 72 (second inner peripheral face 62) which are the large diameter part. In other words, the parting line "PL25" is faced and separated from the second inner peripheral face 62 which is the large diameter part, and the parting line "PL25" is formed on an opposite side to the press-fitted portion in the press-fitting direction and thus the parting line "PL25" is not press-fitted to the first press-fitting protruded parts 71.

As described above, in the second lens 22, the third lens 23, the lens holder 4 (fourth lens 24) and the fifth lens 25, the parting lines "PL22" through "PL25" are not press-fitted and thus occurrence of axial deviation and deformation of a lens face due to irregularities of the parting lines "PL22" through "PL25" can be avoided at the time of press- fitting.

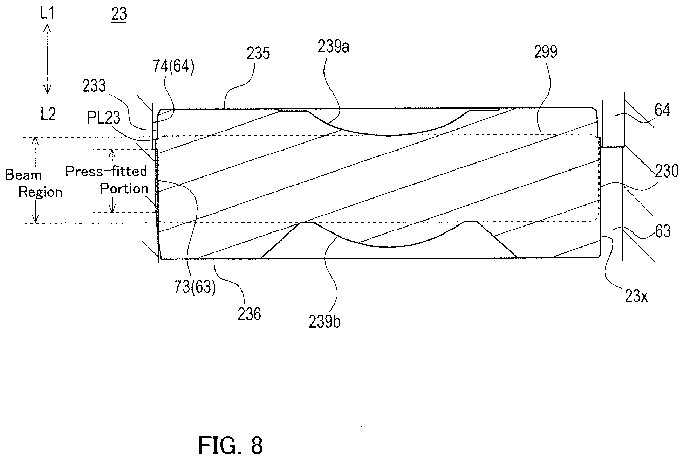

FIG. 8 is a cross-sectional view showing the third lens 23 in which the entire third lens 23 in the press-fitted state is shown. As shown in the drawing, a beam part 299 which is a solid wall part is formed between lens faces of the third lens 23, in other words, between an object side lens face 239a and an image side lens face 239b. In other words, when viewed in a horizontal direction in the drawing, the object side lens face 239a and the image side lens face 239b are not overlapped with the beam part 299. When the third lens 23 is press-fitted, a width in the optical axis "L" direction of the press-fitted portion (thickness in the press fitting direction) is set to be within the width of the beam part 299. After the third lens 23 is press-fitted, a load is applied to a center direction of the optical axis "L" from the lens side face 230. However, a solid wall part made of resin is existed in a direction of the load, i.e., in a direction perpendicular to the optical axis "L", and the direction of the load is deviated from the position where the lens faces are formed and thus an adverse effect to the lens faces can be eliminated.

### (Manufacturing Step of Plastic Lens)

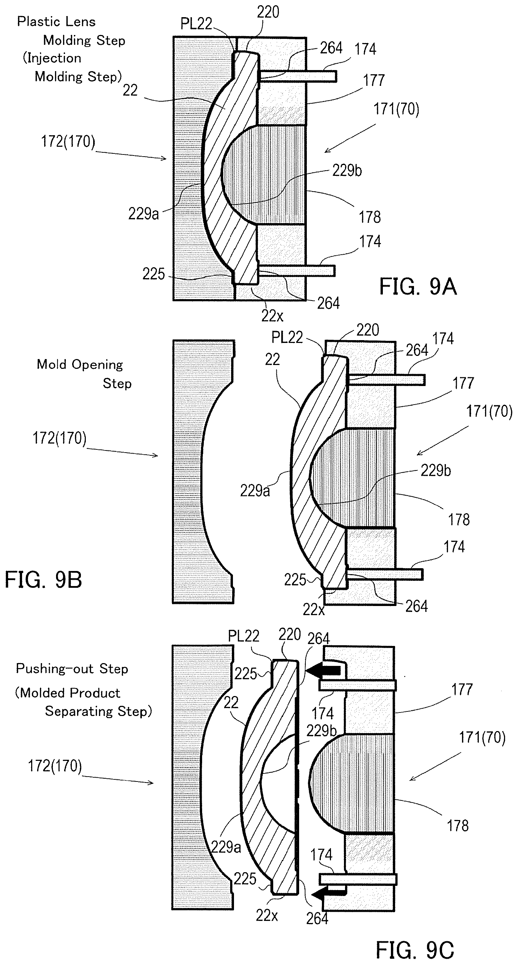

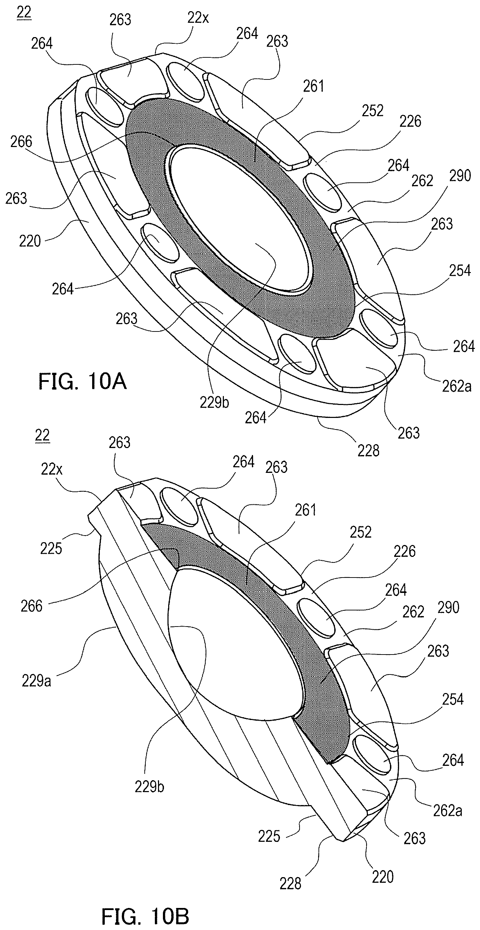

Next, manufacturing steps of a plastic lens will be briefly described below with the second lens 22 as an example. FIGs. 9A, 9B and 9C are views showing manufacturing steps of the second lens 22 by injection molding. FIGs. 10A and 10B are perspective views showing the second lens 22. Fig. 10A shows the entire second lens 22 and FIG. 10B is its cross-sectional perspective view.

In the second lens 22, the lens faces are comprised of an object side lens face 229a having a convex shape on the object side "L1" and an image side lens face 229b having a concave shape on the image side "L2". The second lens 22 is provided with a flange part 228 surrounding an outer peripheral side of the lens faces. In this embodiment, a part of the flange part 228 is formed to be the "D"-cut part 22x.

The object side "L1" of the flange part 228 is an object side flange face 225 which surrounds an outer peripheral side of the object side lens face 229a and its image side "L2" is an image side flange face 226 which surrounds an outer peripheral side of the image side lens face 229b.

The image side flange face 226 is formed in a slightly recessed step shape on an inner side. In other words, the image side flange face 226 is formed with an image side flange face inner peripheral part 261 in a ring and groove shape and an image side flange face outer peripheral part 262 in a ring shape provided on an outer side. Indian ink 290 is coated to the image side flange face inner peripheral part 261. In other words, the image side flange face 226 of the flange part 228 is provided with positioning faces 263, which are formed on an outer peripheral side so as to be protruded to the optical axis "L" direction, and the image side flange face inner peripheral part 261 as the first step part on an inner peripheral side with respect to the positioning faces 263 so as to be recessed with respect to the positioning faces 263 in the optical axis "L" direction (specifically, to the object side "L1"). Indian ink 290 is coated to the image side flange face inner peripheral part 261. In other words, black coating is applied to the image side flange face inner peripheral part 261.

The image side flange face outer peripheral part 262 is provided with a flange face main body 262a as a second step part, and a plurality of the positioning faces 263 which are formed in a boss shape (or protruded shape) on the flange face main body 262a so as to be protruded to the image side "L2" along the outer periphery. In this embodiment, the positioning faces 263 are provided at six positions at equal intervals. In other words, the flange face main body 262a as the second step part is formed on the outer peripheral side so as to be higher by one step with respect to the image side flange face inner peripheral part 261 as the first step part, and the positioning faces 263 are formed on the flange face main body 262a so as to be further higher by one step. In this embodiment, the positioning face 263 in the "D"-cut part 22x is formed so that a part of the positioning face 263 is cut out so as to correspond to the shape of the "D"-cut part 22x.

In the flange face main body 262a which is the second step part, ejector pin abutting parts 264 are formed between the positioning faces 263 adjacent to each other. In this embodiment, the ejector pin abutting part 264 is formed in a boss shape which is slightly protruded from the flange face main body 262a. However, a protruding amount of the ejector pin abutting part 264 is smaller than a protruding amount of the positioning face 263. In other words, the ejector pin abutting parts 264 are formed so as not to obstruct a function as the reference surface of the positioning faces 263. Ejector pins 174 are abutted with the ejector pin abutting parts 264 when the second lens 22 is to be separated from the die 170 at the resin molding. Therefore, commonly, an ejector pin trace is formed on the ejector pin abutting part 264 which is formed on the image side flange face 226 of the flange part 228.

The object side flange face 225 is formed at a position facing the ejector pin abutting part 264 on the object side "L1". In this embodiment, it is structured that a position facing a center position of the ejector pin abutting part 264 (or ejector pin trace) is set to face the object side flange face 225 and not to face the object side lens face 229a. In accordance with an embodiment of the disclosure, the ejector pin abutting part 264 is not limited to the structure of a protruded shape as described above. For example, the ejector pin abutting part 264 may be provided on the same plane as the flange face main body 262a which is the second step part, and alternatively, the ejector pin abutting part 264 may be formed in a recessed shape with respect to the flange face main body 62a.

The image side flange face inner peripheral part 261 is slightly recessed to the object side "L1" with respect to the image side flange face outer peripheral part 262 and is applied with Indian ink 290. Indian ink 290 is applied to the image side flange face inner peripheral part 261 so as to be a black coated part and thus a ghost generated through the flange part 228 of the second lens 22 can be suppressed. Indian ink 290 functions to prevent light diffusion by India ink color and, in addition, a boundary face between the image side flange face inner peripheral part 261 and air is eliminated by Indian ink 290 and the inner face reflectance is reduced.

In accordance with an embodiment of the disclosure, the image side flange face inner peripheral part 261 may be formed with fine irregularities or embossing. For example, in a case that the second lens 22 is a plastic lens, Indian ink 290 may be shed and repelled and coating is not stabilized and is not made thin. However, when provided with fine irregularities, flow of the applied Indian ink 290 is prevented and a proper amount can be applied to an appropriate region.

Further, a boundary portion between the image side flange face inner peripheral part 261 and the image side lens face 229b may be formed with a minute burr 266 of about 1µm which is projected to the image side "L2". The burr 266 is formed when the second lens 22 is molded.

As shown in FIG. 9A to FIG. 9C, a die 170 having a movable die 171 and a fixed die 172 is used in a molding step of the second lens 22. As shown in a plastic lens molding step in FIG. 9A, in a state that the movable die 171 on the right side and the fixed die 172 on the left side in the drawing are closed, resin is injected from a gate into an inside of the die 170.

Faces corresponding to the image side lens face 229b and the image side flange face 226 are provided in the movable die 171, and faces corresponding to the object side lens face 229a and the object side flange face 225 are provided in the fixed die 172. Further, a boundary (parting surfaces) between the movable die 171 and the fixed die 172 is located at an end part on the object side "L1" of the vertical face 221 (boundary between the object side inclined face 223 and the vertical face 221) of the lens side face 220 of the second lens 22. In other words, the boundary between the movable die 171 and the fixed die 172 is located on the object side "L1" with respect to the press-fitted portion.

Since the boundary is set as described above, as shown in a pushing-out step (molded product separating step) in FIG. 9C, the parting line "PL22" of the second lens 22 is formed on the object side "L1" with respect to the press-fitted portion. Further, the gate port is located in a portion of the "D"-cut part 22x of the lens side face 220.

As shown in a mold opening step in FIG. 9B, the movable die 171 and the fixed die 172 are separated from each other at a timing when the resin is hardened. In this case, the second lens 22 is separated from the fixed die 172 and is held by the movable die 171 in a fixed state. After that, as shown in the pushing-out step in FIG. 9C, the ejector pins 174 provided in the movable die 171 push out the second lens 22 through the ejector pin abutting parts 264 and the second lens 22 is separated from the movable die 171.

In this case, the position where the ejector pin 174 is abutted (in other words, the ejector pin abutting part 264) is set so as to face the object side flange face 225 of the flange part 228. Therefore, an adverse effect such as occurrence of distortion is not given to a shape of the lens face (specifically, the object side lens face 229a) due to a pushing-out operation of the ejector pin 174 for the second lens 22.

When the second lens 22 is to be detached from the die 170 at the time of resin molding, more specifically, when the second lens 22 is to be detached from the movable die 171 by the ejector pin 174, it may be structured that the burr 266 as described above is formed in a ring shape in a boundary between the image side lens face 229b and the image side flange face inner peripheral part 261. The burr 266 is a minute ring-shaped projecting part which is formed by resin injected between an image side lens face forming die 178 forming the image side lens face 229b and an image side flange face forming die 177 forming the image side flange face 226. The burr 266 prevents Indian ink 290 from flowing to the image side lens face 229b when the Indian ink 290 is applied. In this embodiment, a projecting amount of the burr 266 is about several µm. Further, it may be structured that arrangement of the image side lens face forming die 178 and the image side flange face forming die 177 is modified with a further high degree of accuracy so that the burr 266 is not formed.

Further, when the image side flange face inner peripheral part 261 is formed so as to be located on the object side in the optical axis direction with respect to the positioning face 263, the position in the optical axis "L" direction of the second lens 22 is prevented from being varied due to thickness of black coating. Therefore, deterioration of the optical performance can be prevented. In this embodiment, the thickness of Indian ink 290 is about 30µm at the maximum. Therefore, a distance from the image side flange face inner peripheral part 261 to a tip end of the positioning face 263 may be set about 50µm, and it is natural that the distance may be adjusted depending on a thickness of the Indian ink 290 which is applied.

The features of this embodiment described above will be briefly summarized as follows. When the second lens 22 through the fifth lens 25 which are plastic lenses (including the fourth lens 24 held by the lens holder 4) are to be press-fitted to the lens barrel 3, the parting lines "PL22" through "PL25" formed in the plastic lenses are not press-fitted. Therefore, deviation of the lens axis and occurrence of distortion and deformation due to the minute projecting parts formed on the parting lines "PL22" through "PL25" can be prevented. In other words, deterioration of the optical characteristic can be prevented.

The image side inclined faces 222, 232, 242 and 252 (taper shape) are formed and thus press fitting of the lens can be smoothly performed. Further, a trouble such as axial deviation can be also avoided.

The second inclined face (object side inclined faces 223 through 253) whose diameter becomes smaller toward an opposite side in the press-fitting direction (toward the object side "L1") is formed on an opposite side in the press-fitting direction (object side "L1") with respect to the parting lines "PL22" through "PL25". Therefore, in the mold opening step after injection molding, the plastic lens (in this embodiment, the second lens 22, the third lens 23, the fifth lens 25) and the lens holder 4 are easily separated from the fixed die 171. Therefore, when to be separated from the fixed die, generation of a burr can be suppressed.

When the second lens 22, the third lens 23, the lens holder 4 and the fifth lens 25 are injection-molded, especially in a separating step of the molded product from a die (mold opening step), in a case that the ejector pin is used, the flange parts 228, 238, 248 and 258 provided in outer peripheries of the respective lenses giving no influence to their lens faces are pressed by the respective ejector pins and thus influence to the lens face can be eliminated.

In a case that the ejector pins 174 are to be abutted and press the flange parts 228, 238, 248 and 258, lens faces are not formed in a pressing direction of the ejector pin 174 and the flange parts 228, 238, 248 and 258 are formed in the pressing direction. Therefore, in addition to the lens faces on the side where the ejector pins 174 are abutted, the lens faces on the opposite side can be prevented from being acted by a force of the ejector pin 174.

In the third lens 23 having a shape as shown in FIG. 8, a load is applied in a center direction of the optical axis "L" from the lens side face 230 after press fitted. However, a resin solid portion is provided in a direction of the load, in other words, in a direction perpendicular to the optical axis "L" direction, and the direction of the load is deviated from the position where the lens faces are formed. Therefore, an adverse effect to the lens faces can be eliminated.

The fourth lens 24 is a glass lens. However, when the press-fitting structure as described above is applied to the lens holder 4 made of resin which accommodates the fourth lens 24, the lens holder 4 can be structured similarly to other plastic lenses and thus the press-fitting structure of the lens holder 4 can be prevented from being complicated.

Further, although the fourth lens 24 is a glass lens, the fourth lens 24 may be a glass lens molded by glass molding. In this case, it is preferably structured as follows. In other words, the fourth lens 24 is held by the lens holder 4, a side face of the fourth lens is formed with a glass lens press-fitted portion 24a1 which is press-fitted to the lens holder 4 and a parting line "PL24a" which is formed by parting surfaces of a fixed die and a movable die of a die used when molded. Further, an inner peripheral face of the lens holder 4 is formed with a press-fitting holding part 24a2 which holds the glass lens side press-fitted portion by press-fitting and a large diameter part 24a3 whose diameter is larger in a radial direction than that of the press-fitting holding part 24a2, and the large diameter part faces the parting line and is formed on the opposite side in the press fitting direction with respect to the press-fitted portion. In a case that a glass lens is to be constituted as an aspherical lens, the glass lens having an aspherical surface is molded by glass molding. Also in this case, the parting line "PL24a" is formed but, when the structure described above is adopted, the parting line "PL24a" is not press-fitted to the lens holder 4. Therefore, axial deviation and occurrence of distortion of the glass lens (fourth lens 24) due to a minute projecting part formed on the parting line "PL24a" can be prevented. In other words, deterioration of the optical characteristic can be prevented.

### REFERENCE SIGNS LIST

1 lens unit
2 wide angle lens
3 lens barrel
4 lens holder
5 O-ring
21 first lens
22 second lens
23 third lens
24 fourth lens
25 fifth lens
26 sixth lens
31 flat face part
33, 35 caulked part
34 groove part
36 light shielding sheet
37 diaphragm
60 inner peripheral face
61∼64 first to fourth inner peripheral face
70 press-fitting protruded parts
71∼74 first to fourth press-fitting protruded part
170 die
171 movable die
172 fixed die
174 ejector pins
177 image side flange face forming die
178 image side lens face forming die
220, 230, 240, 250 lens side face
221, 231, 241, 251 vertical face
222, 232, 242, 252 image side inclined face
223, 233, 243, 253 object side inclined face
225, 235, 245, 255 object side flange face
226, 236, 246, 256 image side flange face
228, 238, 248, 258 flange part
229a object side lens face
229b image side lens face
244, 254 flange small diameter part
261 image side flange face inner peripheral part
262 image side flange face outer peripheral part
262a flange face main body
263 positioning faces
264 ejector pin abutting part
266 burr
290 Indian ink
299 beam part
PL22∼PL25 parting line

## Claims

1. A lens unit (1) comprising:
a plurality of lenses (21, 22, 23, 24, 25, 26); and
a lens barrel (3) which holds the plurality of the lenses (21, 22, 23, 24, 25, 26);
wherein the plurality of the lenses (21, 22, 23, 24, 25, 26) comprises at least one plastic lens (22, 23, 25, 26) which is molded by injection molding;
wherein a side face (220, 230, 250) of the plastic lens (22, 23, 25, 26) is formed with a lens side press-fitted portion which is press-fitted to the lens barrel (3) and a parting line (PL22, PL23, PL25) which is formed by parting surfaces of a fixed die (172) and a movable die (171) of a die (170) used in the injection molding;
wherein an inner peripheral face (60) of the lens barrel (3) is formed with a press-fitting holding part to which the lens side press-fitted portion is press-fitted and held, and a large diameter part whose diameter is larger in a radial direction than a diameter of the press-fitting holding part; and
wherein the large diameter part faces the parting line (PL22, PL23, PL25) and is formed on an opposite side in a press-fitting direction with respect to the lens side press-fitted portion.

2. The lens unit (1) according to claim 1, wherein the side face (220, 230, 250) of the plastic lens (22, 23, 25, 26) is formed with a first inclined face (222, 232, 252) on a side in the press-fitting direction with respect to the lens side press-fitted portion so that a diameter of the first inclined face (222, 232, 252) becomes smaller toward the press-fitting direction.

3. The lens unit (1) according to claim 2, wherein the side face (220, 230, 250) of the plastic lens (22, 23, 25, 26) is formed with a second inclined face (223, 233, 253) on an opposite side in the press-fitting direction with respect to the parting line (PL22, PL23, PL25) so that a diameter of the second inclined face (223, 233, 253) becomes smaller toward the opposite side in the press-fitting direction.

4. The lens unit (1) according to any one of claims 1 to 3, wherein
the plastic lens (22, 23, 25, 26) comprises a lens face (229a, 229b, 239a, 239b) and a flange part (228, 238, 258) surrounding an outer periphery of the lens face (229a, 229b, 239a, 239b), and
an image side face (229b, 239b) of the flange part (228, 238, 258) is formed with an ejector pin trace.

5. The lens unit (1) according to claim 4, wherein the ejector pin trace is formed so that at least a part of the ejector pin trace faces an object side face (229a, 239a) of the flange part (228, 238, 258).

6. The lens unit (1) according to any one of claims 1 to 5, wherein
the plurality of the lenses (21, 22, 23, 24, 25, 26) comprises a plurality of the plastic lenses (22, 23, 25, 26),
at least one of the plurality of the plastic lenses (22, 23, 25, 26) is structured so that a width in an optical axis (L) direction of the lens side press-fitted portion is set within a width of a resin solid portion between an object side lens face (229a, 239a) and an image side lens face (229b, 239b) of the plastic lens (22, 23, 25, 26) in the optical axis (L) direction.

7. The lens unit (1) according to any one of claims 1 to 5, wherein
one of the plurality of the lenses (24) is fitted to a lens holder (4), and
the shape of the plastic lens (22, 23, 25, 26) is applied to a shape of the lens holder (4).

8. The lens unit (1) according to claim 1, wherein the press-fitting holding part is formed in stripe shapes toward the optical axis (L) direction.

9. A lens unit (1) comprising:
a plurality of lenses (21, 22, 23, 24, 25, 26); and
a lens barrel (3) which holds the plurality of the lenses (21, 22, 23, 24, 25, 26);
wherein one of the plurality of the lenses (24) is fitted to a lens holder (4) which is molded by injection molding,
wherein a lens holder side face of the lens holder (4) is formed with a holder side press-fitted portion which is press-fitted to the lens barrel (3) and a parting line which is formed by parting surfaces of a fixed die (172) and a movable die (171) of a die (170) used in the injection molding,
wherein an inner peripheral face (60) of the lens barrel (3) is formed with a press-fitting holding part to which the lens side press-fitted portion is press-fitted and held, and a large diameter part whose diameter is larger in a radial direction than a diameter of the press-fitting holding part, and
wherein the large diameter part faces the parting line and is formed on an opposite side in a press-fitting direction with respect to the lens side press-fitted portion.

10. A lens unit (1) comprising:
a plurality of lenses (21, 22, 23, 24, 25, 26); and
a lens barrel (3) which holds the plurality of the lenses (21, 22, 23, 24, 25, 26);
wherein the plurality of the lenses (21, 22, 23, 24, 25, 26) comprises at least one glass lens (21, 24) which is molded by glass molding;
wherein the glass lens (24) is held by a lens holder (4);
wherein a side face (240) of the glass lens (24) is formed with a glass lens side press-fitted portion which is press-fitted to the lens holder (4) and a parting line (PL24) which is formed by parting surfaces of a fixed die (172) and a movable die (171) of a die (170) used in the glass molding,
wherein an inner peripheral face of the lens holder (4) is formed with a press-fitting holding part to which the glass lens side press-fitted portion is press-fitted and held, and a large diameter part whose diameter is larger in a radial direction than a diameter of the press-fitting holding part, and
wherein the large diameter part faces the parting line and is formed on an opposite side in a press-fitting direction with respect to the press-fitted portion.
